# EUROPEAN PATENT APPLICATION

(11) **EP 1 376 342 A2**
(43) Date of publication of application: **02.01.2004**
(21) Application number: 03011837.6
(22) Date of filing: 26.05.2003
(51) Int. Cl.: G06F 9/445

(54) **Single pass intermediate language verification algorithm**

(30) Priority: 26.06.2002 US 180733
(71) Applicant: MICROSOFT CORPORATION, Redmond, WA 98052 (US)
(72) Inventor: Fedorov, Vladimir, Bellevue, Washington 98004 (US)
(74) Representative: Grünecker, Kinkeldey, Stockmair & Schwanhäusser Anwaltssozietät

(57) **Abstract**

An intermediate language (IL) program is verified by processing the IL program in a single pass. Processed IL instructions may be provided to a just-in-time (JIT) compiler so that the IL program can be converted into a native language program of a targeted device. A verification apparatus may comprise a memory, a sequencing module, a memory updating module, and a rule logic module. The memory comprises an IL offset stack and a data structure that stores information of an IL stack corresponding to a processed IL instruction. The verification apparatus processes the IL program in a straight-line manner except when encountering IL instructions that correspond to designated op code types. In such cases, the verification apparatus may alter a sequencing of processing the IL program by utilizing the IL offset stack.

## Description

### FIELD OF THE INVENTION

The invention generally relates to verifying intermediate software code.

### BACKGROUND OF THE INVENTION

Compiling a software program from source code language to an intermediate language (IL) is known in the art. Examples of source code languages are C#, C++, and Visual Basic. With the software program being converted to an intermediate language, transmission of the program across a network or a wireless connection to a targeted device, e.g. a personal digital assistant (PDA), is facilitated because transmission of large binary files (corresponding to programs in a native language of the targeted device) is circumvented. Also, compilation of the software at the targeted device is simplified in that some of the compilation is performed at the server by converting the source code into an intermediate language. Before converting the intermediate language program into a corresponding native language software program, the intermediate language software program is typically verified that the corresponding native language software program will execute on the targeted device without malfunctioning due to incompatibilities or malicious input. For example, the targeted device may not be able to execute a complete set of intermediate language instructions. Moreover, the intermediate language code may have errors ("bad code") that may result in the targeted device having problematic behavior during execution. The native language software program is subsequently executed on the targeted device. In general, the purpose of verification is to determine that the execution of the native code resulting from the translation of IL will not result in harm.

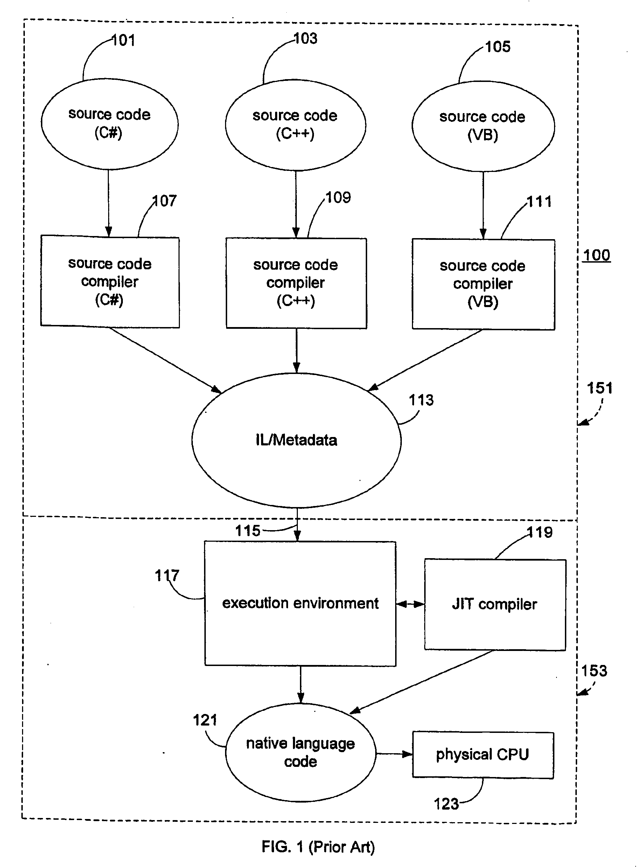

Figure 1 illustrates a just-in-time (JIT) compilation environment according to prior art. As an example, Microsoft Common Language RunTime system 100 enables programs that are written in a variety of source code languages, e.g. source code (C#) 101, source code (C++) 103, and source code (VB) 105, to be compiled to an intermediate language 113 by processing the programs by compilers 107, 109, and 111, respectively, on a server-side 151. On a client-side 153, an execution environment 117 of the system passes the intermediate language code, as needed, to a just-in-time (JIT) compiler 119 that compiles the intermediate language code into a native machine code 12¹ for immediate execution on a physical CPU 123 of the client computer system that hosts execution environment 117.

Execution environment 117 accepts intermediate language 113 of a software program to be executed and manages its execution. Execution environment 117 performs a variety of tasks including class loading, garbage collection, exception handling, stack walking, and an implementation of a security model. Execution environment 117 processes the program one method at a time, as the methods are called for execution by the software program. (In object-oriented programming, a method is a procedure that is executed when an object receives a message. A method is essentially the same as a procedure, function, or routine in procedural programming languages. The only difference is that in object-oriented programming, a method is always associated with a class.)

The first time a method is invoked for execution, execution environment 117 calls JIT compiler 119 to convert IL code of the method to the native machine code of physical CPU 123. JIT compiler 119 is provided with a pointer to the IL method code and begins to compile the code. As JIT compiler 119 encounters references to metadata tokens (which, for example, contain data type information) it will query execution environment 117 to resolve the references. JIT compiler 119 performs several consistency checks on IL code 113 during the compilation process, including data type checking, stack overflow/underflow checking, and checking of the stack state at merge points in the code (at which an IL instruction can be reached by different execution paths).

During compilation, JIT compiler 119 runs through a series of steps to break intermediate language code 113 down into a form that is readily translated into machine code in the form of an abstract syntax tree (AST) representation. As the trees are formed, JIT compiler 119 checks certain aspects of intermediate language code 113 for consistency. Specifically, JIT compiler 119 insures that the operands are valid for the intermediate language instruction being performed and that an evaluation stack does not overflow or underflow. It also insures that if an instruction can be executed via different execution paths, that the data types on the evaluation stack are independent of the path taken. Because the compilation is "just-in-time," the compilation is interleaved with code execution. Only that code which is needed is compiled and checked, which saves time at execution.

During creation of the abstract syntax tree representation, JIT compiler 119 performs a first pass over intermediate language code 113 for a method in order to identify the location of all basic blocks within the code and to create a sorted array of the basic blocks representing a flow graph of the method. A basic block consists of one or more sequential instructions that execute without jumping or branching to any other portion of code until the end of the basic block. A new basic block may begin, for example, on (i) the destination of a conditional or unconditional branch, (ii) the instruction after a conditional branch, (iii) all destinations of a switch, including the fall through case, (iv) the start of a try clause, (v) the end of a try clause (i.e., the instruction after the last instruction inside the try clause), (vi) the start of a catch clause handler, (viii) the start of a filter clause handler (if the exception clause has a filter), (ix) the start of a finally clause handler, or (x) the start of a fault clause handler. A method may define a range of IL instructions that are said to be protected. This is called a try block. The try block can associate one or more exception handling blocks with the try block. If an exception, e.g. an arithmetic overflow or stack overflow, occurs during execution anywhere within the try block, an exception object is created that describes the problem. An exception handler handles the exception.

The compilation and verification of intermediate language code requires several passes of processing in order to convert it into native language code 121. Typically a structural tree is formed for the entirety of the intermediate language code 113. The approach of prior art, as described heretofore, increases demands on memory in execution environment 117 and JIT compiler 119. Multiple passes also increases the time to process intermediate language 113. Moreover, if the multiple passes use a large number of variable size structures, a hardware implementation of verification and compilation may be very difficult. Thus, it would be an advancement in the art to provide verification and compilation of intermediate language code that requires only a single pass of processing.

### BRIEF SUMMARY OF THE INVENTION

The inventive method and apparatus overcome the problems of the prior art by verifying an intermediate language (IL) program in one pass rather than multiple passes before converting the IL program into a native language program. Verifying the IL program in one pass rather than multiple passes may reduce memory requirements and may decrease the processing time. In an embodiment of the invention, a verification apparatus processes an intermediate language program to determine if the IL program is consistent with rules in accordance with European Computer Manufacturer's Association (ECMA) standards. The IL program may be generated by a high-level compiler from a high-level language program (e.g. C++, C#, and visual basic). Generated IL instructions may be provided to a just-in-time (JIT) compiler so that the IL program can be converted into a native language program of a targeted device. In one embodiment, the verification apparatus comprises a memory, a sequencing module, a memory updating module, and a rule logic module. The memory comprises an IL offset stack, a data structure that stores information of an IL stack corresponding to a processed IL instruction and flags array. The verification apparatus verifies whether the IL program is consistent with the rules by processing the IL program in a straight-line manner except when encountering IL instructions that correspond to designated op code types. In such cases, the verification apparatus may alter a sequencing of processing the IL program by utilizing the IL offset stack onto/from which an IL offset of a corresponding IL instruction is pushed or popped. An embodiment may also support a status module that notifies a user about IL instructions that are not consistent with the rules.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
Figure 1 illustrates a just-in-time (JIT) compilation environment according to prior art.
Figure 2 illustrates an architecture for processing a high level language program into a native instruction set utilizing an intermediate language (IL) program according to an illustrative embodiment of the invention.
Figure 3 illustrates a representation of an intermediate language (IL) program that may be verifiable according to an illustrative embodiment of the invention.
Figure 4 illustrates an intermediate language (IL) stack that may be used for verification and just-in-time (JIT) compilation according to an illustrative embodiment of the invention.
Figure 5 shows an example of rearranging an intermediate language (IL) program according to an illustrative embodiment of the invention.
Figure 6 shows an apparatus for verifying an intermediate language (IL) program according to an illustrative embodiment of the invention.
Figure 7 shows a flow diagram for processing an intermediate language (IL) program according to an illustrative embodiment of the invention.
Figure 8 is a continuation of the flow diagram that is shown in Figure 7 according to an illustrative embodiment of the invention.
Figure 9 is a continuation of the flow diagram that is shown in Figure 7 according to an illustrative embodiment of the invention.
Figure 10 is a continuation of the flow diagram that is shown in Figure 7 according to an illustrative embodiment of the invention.
Figure 11 is a continuation of the flow diagram that is shown in Figure 7 according to an illustrative embodiment of the invention.
Figure 12 is a continuation of the flow diagram that is shown in Figure 7 according to an illustrative embodiment of the invention.

### DETAILED DESCRIPTION OF THE INVENTION

Aspects of the invention verify an intermediate language (IL) program by processing the IL code in a single pass. One or more aspects of the invention are applicable to any general purpose computing platform capable of running a variety of operating systems, virtual machines, and applications, including PCs running WINDOWS®, LINUX®, MacOS®, or SOLARIS® brand operating systems and the like, as well as personal digital assistant (PDA) devices, Tablet PCs, pen-based computers, and other data processing systems.

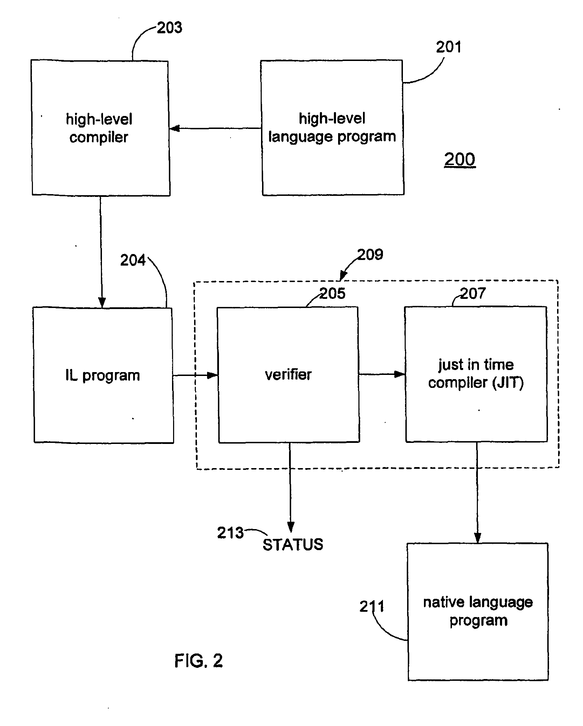

Figure 2 illustrates an architecture 200 for processing a high-level language program 201 into a native instruction program 211 utilizing an intermediate language (IL) program 204 according to an illustrative embodiment of the invention. High-level language program (which may be written in C++ or C# language) is converted to intermediate language program 204 by a high-level compiler 203. Intermediate program 204 may be transmitted to a processing unit 209 across a network. Different types of IL instructions (associated with different op code types) are supported, including instructions for arithmetic and logical operations, control flow, direct memory access, exception handling, and memory invocation. Also, other types of IL instructions may support object-oriented programming constructs such as virtual method calls, field access, array access, and object allocation and initialization.

Processing unit 209 comprises a verifier 205 and a just-in-time (JIT) compiler 207. Verifier 205 and JIT compiler 207 may share resources, e.g. memory stacks, in order to reduce the required resources and to expedite the over-all function of processing unit 209. Verifier 205 processes intermediate language program 204 in order to determine whether JIT compiler 207 can convert intermediate language program 204 into native language program 211 that executes on a physical computing processor (e.g. a PDA) in a reliable manner. A determination may be dependent upon the processing of the physical computer processor and may vary from another type of physical computing processor. The integrity of an IL instruction, if the instruction is verifiable, is indicated by a status 213. As part of a failure routine, status 213 may be used to warn a user of the physical computing processor that a portion of IL program 204 may not be converted into native language for compilation and execution on the physical computing processor. Other embodiments may utilize other actions, e.g. informing the server side in order to reload another version of IL program 204 that may be compatible with the physical computing processor or generating native code that, when executed, throws a verification exception rather than the basic block that failed verification.

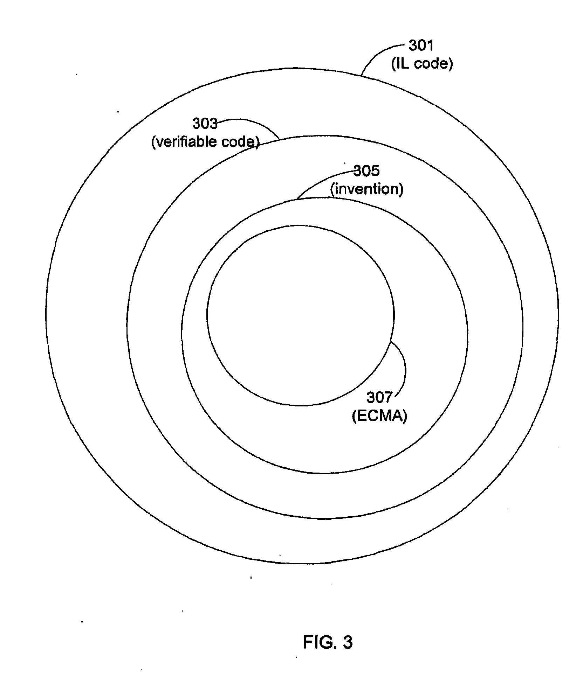

Figure 3 illustrates a representation of an intermediate language program 301 that may be verifiable according to an illustrative embodiment of the invention. The embodiment utilizes a set of verification rules, e.g., as the verification rules provided by "Common Language Infrastructure (CLI) Partition III CIL Instruction Set," European Computer Manufacturer's Association (ECMA) Standardizing Information and Communication Systems TC39/TG3 internal working document. Typically, not all the instructions of intermediate language program 301 are verifiable. A verifiable portion of program 301 is represented by a verifiable code 303. However, a verifier that utilizes ECMA procedures may be able only to cover an IL code set 307. The procedures that are supported by an embodiment of the invention enable an IL code set 305 to be verified by verifier 205. (ECMA procedures may specify restrictions on verifiable code that are not necessary for verification and compilation. The embodiment, for example, does not impose a backward branch constraint as specified in ECMA procedures.) Verification rules include rules for IL stack checking (including overflow/underflow checking and checking of IL stack contents at merge points in the IL code) and data type checking.

Verifier 205 may essentially process IL instructions one instruction ahead of JIT compiler 207. Verifier 205 sequences through IL program 204 and utilizes a rule set. For example, verifier 205 may encounter an add instruction that adds two four-byte integers and verifies the instruction by utilizing the rule set provided by the ECMA standards. Using the same set of rules, verifier 205 may determine that the add instruction is not consistent with the rules set if, for example, an integer and a character string are associated with the add instruction.

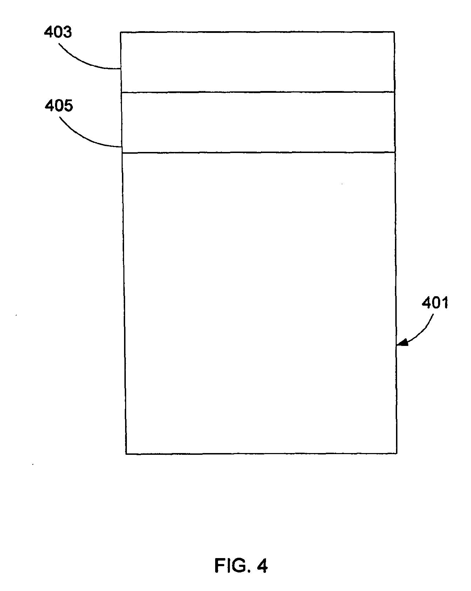

Figure 4 illustrates an intermediate language (IL) stack 401 that may be used for verification by verifier 205 and JIT compiler 207 according to an illustrative embodiment of the invention. Verifier 205 executes a virtual machine with IL stack 401. Verifier 205 attempts to associate a valid IL stack with each IL instruction. The following exemplary IL program illustrates the utilization of IL stack 401. The exemplary IL program may be an output of high-level compiler 203 that processes high-level language program 201.

| | |
|---|---|
| (Line 1) | ldc.i4 10 |
| (Line 2) | ldc.i4 20 |
| (Line 3) | add |
| (Line 4) | box |
| (Line 5) | call Integer.ToString() |
| (Line 6) | ldstr "Hello World " |
| (Line 7) | call string. concat() |
| (Line 8) | console.writeline() |

The contents of IL stack 401 during the execution of the exemplary IL program are shown in the following table.

**TABLE:**

| **EXAMPLE - IL STACK** | | |
|---|---|---|
| **Code Line** | **Entry 403** | **Entry 405** |
| 1 | 10 | - |
| 2 | 20 | 10 |
| 3 | 30 | - |
| 4 | Integer(30) | - |
| 5 | String(30) | |
| 6 | String(Hello World ) | String(30) |
| 7 | String(Hello World 30) | - |
| 8 | - | - |

With code line 1, "10" (in a four byte representation) is loaded on the top (corresponding to an entry 403) of IL stack 401. With code line 2, "20" is pushed onto IL stack 401 so that entry 403 contains "20" and an entry 405 contains "10". With code line 3, entries 403 and 405 are added together with the result saved on the top of the stack (entry 403). With code line 4, "30" is typed as an integer, and with code line 5, the results are converted into an ASCII string "30". With code line 6, an ASCII string "Hello World " is pushed onto IL stack 401. With code line 7, ASCII string "Hello World " and string "30" are concatenated together to form an ASCII string "Hello World 30". With code line 8, the string is outputted to a display console, and IL stack 401 becomes empty.

As each IL instruction in the exemplary IL program is processed by verifier 204, each IL instruction is associated with an IL stack state. The IL stack state may be represented by the actual entries in the IL stack that correspond to an IL instruction (e.g. entry 403=20 and entry 405=10). Other embodiments may store only differential information for the IL stack state (e.g. only information that is different between two adjacent IL instructions) is stored. As an example, IL stack 401 may comprise of many entries (e.g. more than a hundred) even though an IL instruction may affect only a few of the entries. A compression routine may track only the effects of changes in IL stack 401, thus avoiding the allocation of stack memory for entries that do not change as a result of the IL instruction.

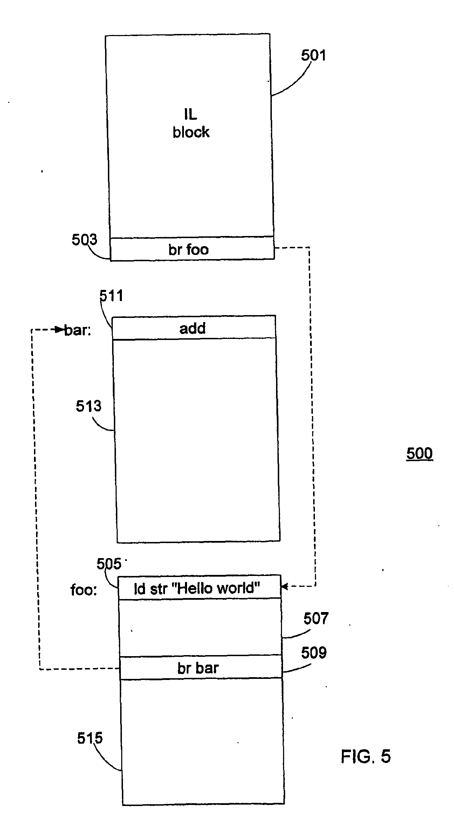

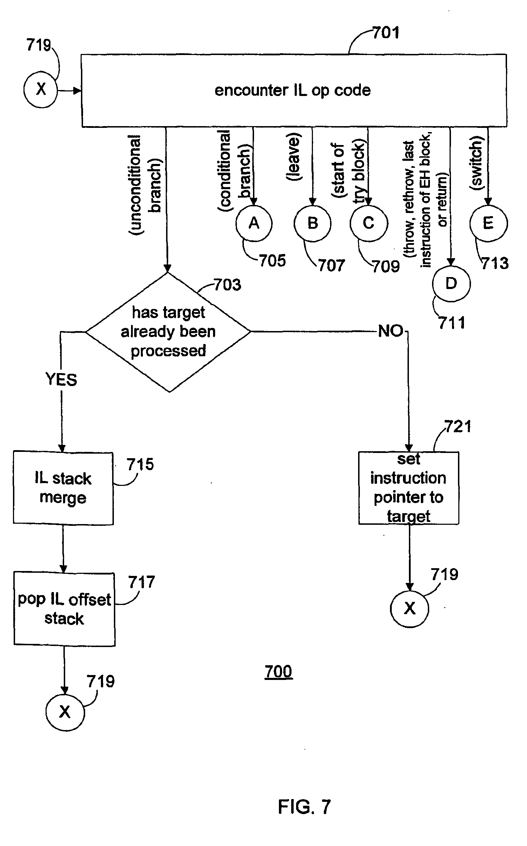

Figure 5 shows an example of rearranging an intermediate language (IL) program 500 according to an illustrative embodiment of the invention. IL program 500 may be processed in the same ordering as the IL instructions (e.g. with the above example) except when IL instructions of certain op code types are encountered. (Discussion in the context of Figures 7-12 provides op code types that may alter the sequencing of the verification process in accordance with the embodiment.) In the example as shown in Figure 5, verification occurs in the same ordering as an IL block 501. However, when an IL instruction 503 ("br foo" which is an unconditional branch instruction to an IL instruction 505 at foo) is encountered, verifier 205 verifies IL instruction 505 rather than an instruction 511. Verifier 205 then continues to process an IL block 507 in the same ordering until an IL instruction 509 ("br bar" which is an unconditional branch instruction to IL instruction 511 if the Boolean argument is true) is encountered. Verifier 205 then processes IL instruction 511 and an IL block 513. In IL program 500, IL block 515 may not be encountered. If that is the case, IL block may be considered as "dead code" in that the corresponding IL instructions are not verified. In IL program 500, branch instructions 503 and 509 may alter the sequencing of verification with respect to the ordering of the IL instructions.

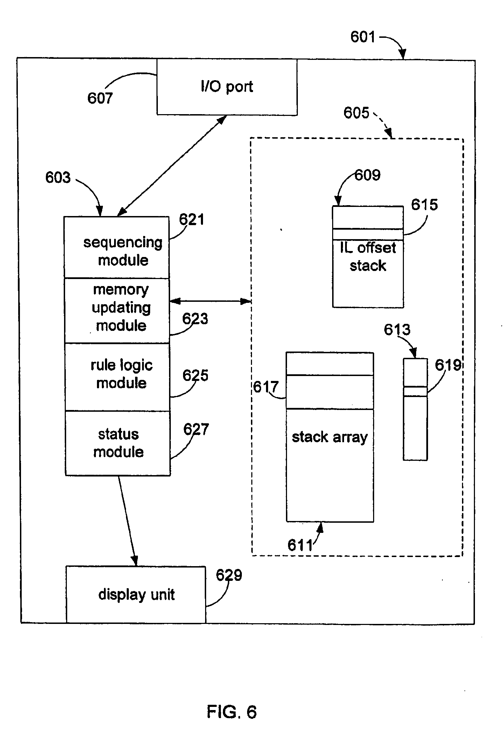

Figure 6 shows apparatus 601 for verifying an intermediate language (IL) program according to an illustrative embodiment of the invention. Apparatus 601 may also perform just-in-time compiling so that resources (e.g. stack array 611 may be shared between the verification process and the just-in-time compiling process.) A processor 603 processes the IL program that may be received through I/O port 607 from a server side. An IL offset (which is a relative location of the IL instruction in relation to a starting location of the IL program) is associated with each IL instruction. Processor 603 supports a sequencing module 621, a memory updating module 623, and a rules logic module 625. In other embodiments, modules 621, 623, and 625 may be implemented differently such as with a microprocessor and peripheral logic, discrete logic circuitry, or application specific integrated circuits (ASIC). Sequencing module 621 determines the ordering of IL instructions for verification.

A status module 627 obtains results from rule logic module 625 indicating whether the processed IL instruction is valid. If the processed IL instruction is not valid, status module 627 instructs a display unit 629 to activate an indicator (e.g. an alphanumeric message) to inform a user of a device (e.g. a PDA). In such a case, a portion of the IL program may generate native code that, when executed, results in a verification exception rather than the basic block that failed verification.

As the IL program is sequenced, a memory 605 may be updated by memory updating module 623 in accordance with Figures 7-12. Also, rules logic module 625 analyzes the IL instruction in order to verify the validity of the IL instruction. In the embodiment, rules logic module 625 utilizes verification rules that are provided by "Common Language Infrastructure (CLI) Partition III CIL Instruction Set." Memory 605 comprises an IL offset stack 609, a stack array 611, and a flag array 613. Stack array 611 is a data structure that stores a state of IL stack 401 as the IL program is being verified. An entry 615 stores a state of IL stack 401 for an IL instruction that has been processed.

As apparatus 601 sequences through the IL program, IL offsets of IL instructions to be subsequently processed are stored in IL offset stack 609. (IL offset stack indicates "work to be done" during the verification process in which an IL instruction is processed when the corresponding IL offset is popped from IL offset stack 609.) If the associated IL instruction has already been processed, an associated flag in flag array 613 is configured accordingly. If the IL instruction has an associated IL stack (as may be the case if the IL instruction were previously processed) a current IL stack is merged with the associated IL stack. Flag entry 619 (contained in flag array 613) may comprise the associated flag and an associated IL offset of the corresponding IL instruction. The associated flag entry 619 is configured to indicate whether the corresponding IL instruction has already been processed.) Also, flag entry 619 may be indicative whether the corresponding IL instruction is a start or an end of an exception handling block. (With other embodiments, flag entry 619 may provide other functionality.) In the embodiment, both flag array 613 and stack array 611 are indexed by the IL offset of the corresponding IL instruction. The IL offset of an IL instruction (that has not been compiled ("jitted") but has a known state of IL stack 401) is pushed on IL offset stack 609. Subsequently, when the IL offset is subsequently popped from IL offset stack 609, the associated IL instruction can be compiled. (Further discussion is provided in the context of Figures 7-12.)

When an IL offset is popped off IL offset stack 609 prior to any other processing, flag array 613 is examined to determine if the IL offset has already been "jitted." If that is the case, a stack merge of the current stack with the stack associated with the IL offset is performed, and IL offset stack 609 is popped again. Otherwise, the IL offset is processed.

Apparatus 601 may be interfaced to a compiler module (that performs just-in-time compilation) through I/O port 607 or may be integrated with the compiler module.

Figure 7 shows a flow diagram 700 for processing an intermediate language program according to an illustrative embodiment of the invention. Apparatus 601 verifies the IL program by sequencing through the IL program in a straight-line manner except when apparatus 601 encounters an IL instruction having an op code type that may alter the sequence of processing. Op code types that may alter the sequencing include an unconditional branch (corresponding to decision step 703), a conditional branch (corresponding to decision step 705), a leave (corresponding to decision step 707), a throw and a return (corresponding to decision step 711), and a switch (corresponding to decision step 713), and exception handling. As apparatus 601 sequences through the IL program, each encountered IL instruction is verified in accordance with rules (e.g: specified in "Common Language Infrastructure (CLI) Partition III CIL Instruction Set"). If apparatus 601 determines that the IL instruction is valid, the IL instruction is compiled ("jitted"). However, if apparatus 601 determines that the IL instruction is not valid, the IL instruction is not compiled.

Apparatus 601 processes an IL program in order to keep the processing of a try block continuous. A try block is a portion of the IL program that executes in a continuous manner except when an exception occurs. In such a case, an exception routine, e.g. a catch block, is executed in order to resolve the exception and to return to the try block. Exception handling blocks, such as a try block, are treated as separate IL streams so that once the exception handling block is encountered, it is completely processed before any IL instruction outside the exception handling block is processed. Other exception handling blocks include catch blocks, finally blocks, fault blocks, and filter blocks. A catch block is executed when a try block is exited due to an error and the error is suppressed. A finally block is executed regardless of how a try block is exited. A fault block is exited when a try block is exited due to an error and the error is not suppressed. A filter block makes a catch block selective to a particular error type or condition.

If apparatus 601 determines that the op code type associated with the IL instruction is an unconditional branch, then in decision step 703 apparatus 601 determines whether a target IL instruction has already been processed. (The "target IL instruction" refers to a target of the unconditional branch instruction. For example, instruction 505 is the target IL instruction of instruction 503.) If not, an instruction pointer is set to the target IL instruction (corresponding to a targeted IL offset) in decision step 721. The target IL instruction is the next instruction that is encountered in decision step 701 (through decision step 719) for subsequent processing by apparatus 601.

In decision step 703, if it is determined that the target IL instruction has already been processed, a current IL stack associated with the IL instruction (stored in stack array 611) is merged with a target IL stack corresponding to the target IL instruction in decision step 715. If the merging of the IL stacks cannot be reconciled, and error routine may be invoked. In decision step 717, IL offset stack'609 is popped, and apparatus 601 encounters a next IL instruction that is associated with the popped IL offset.

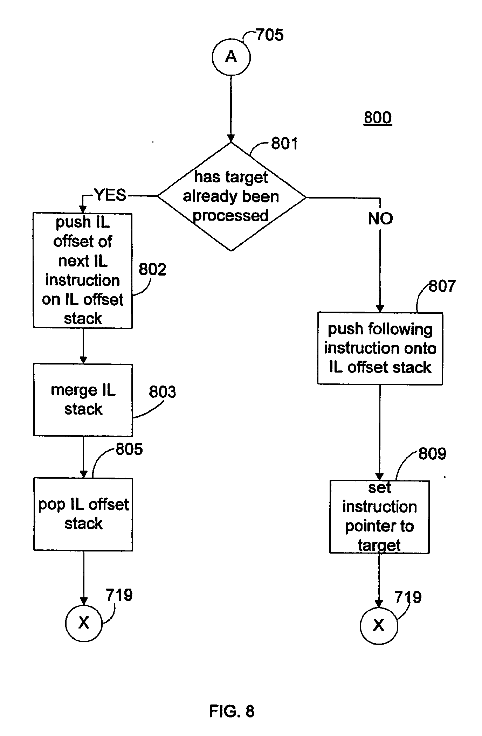

Figure 8 is a continuation of the flow diagram that is shown in Figure 7 according to an illustrative embodiment of the invention, in which an IL instruction corresponding to a conditional branch (corresponding to decision step 705 in Figure 7) is processed. In decision step 801, apparatus 601 determines if a target IL instruction of the IL instruction has not already been processed. If not, an IL offset of the IL instruction following the conditional branch is pushed on IL offset stack 609 in decision step 807. In decision step 809, the instruction pointer is set to the IL offset of the target IL instruction. The target IL instruction is the next IL instruction that is encountered in decision step 701 (through decision step 719). (In other embodiments, the following IL instruction may be processed as the next IL instruction rather than the target IL instruction.) In decision step 801, if it is determined that the target IL instruction has already been processed, the IL offset of the next IL instruction is pushed on IL offset stack 615 in decision step 802. A current IL stack associated with the IL instruction (stored in stack array 611) is merged with a target IL stack corresponding to the target IL instruction in decision step 803. In decision step 805, IL offset stack 609 is popped, and apparatus 601 encounters a next IL instruction that is associated with the popped IL offset.

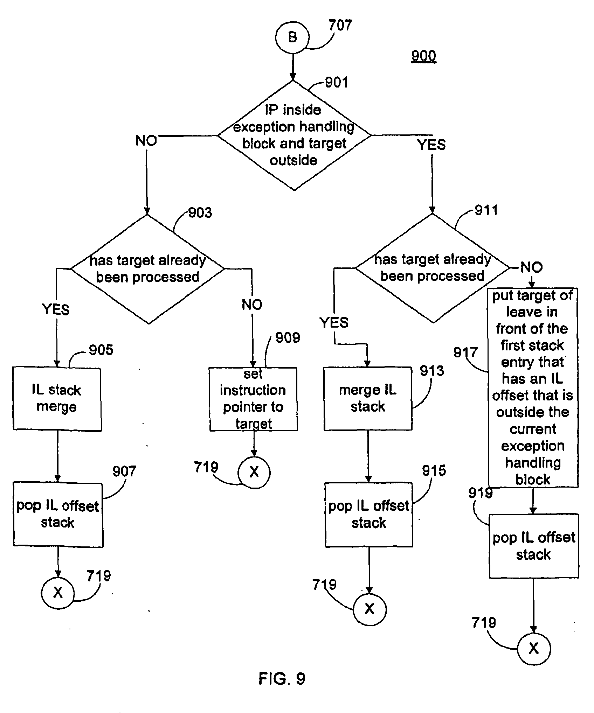

Figure 9 is a continuation of the flow diagram that is shown in Figure 7 according to an illustrative embodiment of the invention, in which an IL instruction corresponding to a leave (corresponding to decision step 707 in Figure 7) is processed. In decision step 901, apparatus 601 determines if a target IL instruction of the IL instruction is outside an exception handling block (which may be a try block, a filter block, a catch block, a fault block, or a finally block) that is being processed. If so, decision step 911 is executed in order to determine whether a target IL instruction has already been processed. If decision step 911 determines that the target IL instruction has not already been processed, an IL offset corresponding to the target IL instruction is inserted into IL offset stack 609 in front of the first stack entry that has an IL offset that is outside the current exception handling block in step 917. Step 919 is then executed in which IL offset 609 is popped. The ordering insures that the exception handling block is processed continuously. If decision step 911 determines that the target IL instruction has been already processed, a current IL stack associated with the IL instruction (stored in stack array 611) is merged with a target IL stack corresponding to the target IL instruction in decision step 913. In decision step 915, IL offset stack 609 is popped, and apparatus 601 encounters a next IL instruction that is associated with the popped IL offset.

In decision step 901, if apparatus 601 determines that the target IL instruction is inside the exception handling block, decision step 903 is executed. In decision step 903, apparatus 601 determines whether the target IL instruction has already been processed. If not, an instruction pointer is set to the target IL instruction (corresponding to a targeted IL offset) in decision step 909. The target IL instruction is the next instruction that is encountered in decision step 701 (through decision step 719) for subsequent processing by apparatus 601.

In decision step 903, if it is determined that the target IL instruction has already been processed, a current IL stack associated with the IL instruction (stored in stack array 611) is merged with a target IL stack corresponding to the target IL instruction in decision step 905. In decision step 907, IL offset stack 609 is popped, and apparatus 601 encounters a next IL instruction that is associated with the popped IL offset.

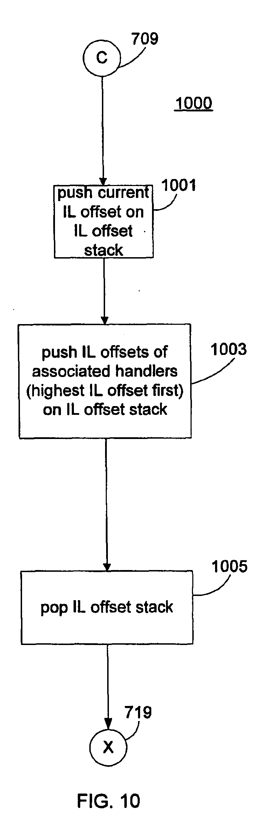

Figure 10 is a continuation of the flow diagram that is shown in Figure 7 according to an illustrative embodiment of the invention, in which an IL instruction corresponds to a start of a try block (corresponding to decision step 709 in Figure 7) is processed. In decision step 1001, apparatus 601 pushes the current IL offset on IL offset stack 609. In decision step 1003, apparatus 601 pushes IL offsets of any associated exception handlers on IL offset stack 609, in which the highest IL offset is first. During the execution of a try block, an exception handler is typically associated with a range of IL instructions in the try block. If something "goes wrong," the corresponding exception handler is executed. (As an example, a handler_1 a handler_2, and a handler_3 are associated with a try block, where an IL offset of handler_3 is greater than an IL offset of handler_2, and where the IL offset of handler_2 is greater than an IL offset of handler_1. The IL offset of handler_3 is pushed first on IL offset stack 609. The IL offset of handler_2 is pushed next, and the IL offset of handler_1 is pushed last.) The ordering of the pushed IL offsets insures that the exception handlers are processed before processing the try block. In decision step 1005, IL offset stack 609 is popped, and apparatus 601 encounters a next IL instruction that is associated with the popped IL offset.

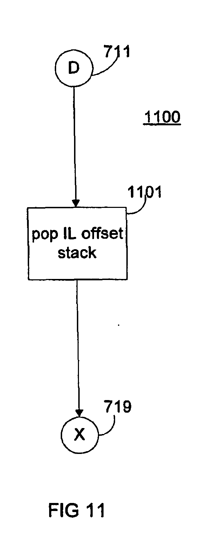

Figure 11 is a continuation of the flow diagram that is shown in Figure 7 according to an illustrative embodiment of the invention, in which an IL instruction corresponding to a throw or a return (corresponding to decision step 711 in Figure 7) is processed. In decision step 1101, IL offset stack 609 is popped, and apparatus 601 encounters a next IL instruction that is associated with the popped IL offset.

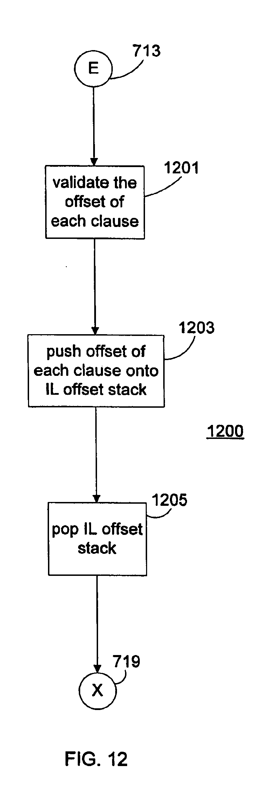

Figure 12 is a continuation of the flow diagram that is shown in Figure 7 according to an illustrative embodiment of the invention, in which an IL instruction corresponding to a switch (corresponding to decision step 713 in Figure 7) is processed. In decision step 1201, apparatus 601 validates the IL offset of each clause. (Validation includes verifying that the IL offset points to a start of an IL instruction, verifying that the IL offset is not inside an exception handling block unless the whole switch is inside the same block, and verifying that the IL offset is not outside the IL program.) In decision step 1203, apparatus 609 pushes the IL offset of each clause on IL offset stack 609. In decision step 1205, apparatus 601, pops IL offset stack 609 and encounters a next IL instruction that is associated with the popped IL offset.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. A method for verifying an intermediate language (IL) program in a single pass, the method comprising the steps of:
(a) encountering an IL instruction, wherein the IL instruction is associated with an IL offset;
(b) decode the IL instruction to determine an op code type;
(c) processing the IL instruction in accordance with the IL op code type and a rule set;
(d) updating a first data structure, a second data structure, and a third data structure, wherein the first data structure comprises an IL offset stack, the second data structure comprises a current IL stack, and the third data structure comprises a flag array;
(e) determining a next IL instruction.

2. The method of claim 1, wherein step (d) comprises the step of merging the current IL stack with an associated IL stack.

3. The method of claim 1, further comprising the step of:
(f) repeating steps (a)-(d) in response to step (e).

4. The method of claim 3, wherein an ordering of processing the IL program is rearranged so that a portion of the IL program is not processed.

5. The method of claim 1, wherein step (b) determines that the IL op code type corresponds to an unconditional branch and wherein a target IL instruction has already been processed, wherein step (d) comprises the step of merging the current IL stack with a target IL stack, and wherein step (e) comprises the step of popping the IL offset stack.

6. The method of claim 1, wherein step (b) determines that the IL op code type corresponds to an unconditional branch and wherein a target IL instruction has not already been processed, and wherein step (e) comprises the step of:
setting an instruction pointer to an offset of the target IL instruction, wherein the target IL instruction shall be subsequently processed.

7. The method of claim 1, wherein step (b) determines that the IL op code type corresponds to a conditional branch, wherein a target IL instruction has not already been processed, wherein step (d) comprises the step of pushing an offset of a following IL instruction on the IL offset stack, and wherein step (e) comprises the step of setting an instruction pointer to an offset of the target IL instruction, wherein the target IL instruction shall be subsequently processed.

8. The method of claim 1, wherein step (b) determines that the IL op code type corresponds to a conditional branch, wherein a target IL instruction has not already been processed, and wherein step (e) comprises the step of setting an instruction pointer to an offset of a following IL instruction, wherein the following IL instruction shall be subsequently processed.

9. The method of claim 1, wherein step (b) determines that the IL op code type corresponds to a conditional branch, wherein a target IL instruction has already been processed, and wherein step (d) comprises the step of merging the current IL stack with a target IL stack, and wherein step (e) comprises the step of popping the IL offset stack.

10. The method of claim 1, wherein step (b) determines that the IL op code type corresponds to a leave, wherein a target IL instruction is outside an exception handling block, wherein the target IL instruction has not been already processed, wherein step (d) comprises the step of inserting an IL offset of the target IL instruction in front of a first IL offset outside the exception handling block into the IL offset stack, and wherein step (e) comprises the step of popping the IL offset stack.

11. The method of claim 1, wherein step (b) determines that the IL op code type corresponds to a leave, wherein a target IL instruction is outside an exception handling block, wherein the target IL instruction has already been processed, wherein step (d) comprises the step of merging the current IL stack with a target IL stack, and wherein step (e) comprises the step of popping the IL offset stack.

12. The method of claim 1, wherein step (b) determines that the IL op code type corresponds to a leave, wherein a target IL instruction is inside an exception handling block, wherein the target IL instruction has not already been processed, and wherein step (e) comprises the step of setting an instruction pointer to an offset of the target IL instruction, wherein the target IL instruction shall be subsequently processed.

13. The method of claim 1, wherein step (b) determines that the IL op code type corresponds to a leave, wherein a target IL instruction is inside an exception handling block, wherein the target IL instruction has already been processed, and wherein step (d) comprises the step of merging the current IL stack with a target IL stack, and wherein step (e) comprises the step of popping the IL offset stack..

14. The method of claim 1, wherein step (b) determines that the IL instruction corresponds to a start of a try block, wherein step (d) comprises the step of pushing a current IL offset on the IL offset stack and the step of pushing IL offsets of associated exception handlers on the IL offset stack, wherein a highest IL offset is first, and wherein step (e) comprises the step of popping the IL offset stack.

15. The method of claim 1, wherein step (b) determines that the IL op code corresponds to a throw, a return, a rethrow, or a last instruction in an exception handling block, wherein step (e) comprises the step of popping the IL offset stack.

16. The method of claim 1, wherein step (e) determines that the IL op code type corresponds to a switch, wherein step (c) comprises the step of validating the IL offset of each clause, wherein step (d) comprises the step of pushing the IL offset of each clause on the IL offset stack, and wherein step (e) comprises the step of popping the IL offset stack.

17. The method of claim 1, wherein step (e) causes sequencing the IL program in a straight-line manner except when the IL instruction has an op code type selected from the group consisting of an unconditional branch, a conditional branch, a leave, a throw, a return, and a switch.

18. The method of method I, further comprising the step of
(f) determining that a verification of the IL program has been completed when the IL offset stack is empty and popping the IL offset stack is attempted.

19. A computer-readable medium having computer-executable instructions for performing the steps recited in claim 1.

20. A verification module for verifying an intermediate language (IL) program in a single pass, the IL program comprising a plurality of IL instructions, the verification module comprising:
(a) a memory comprising:
a data structure that stores information about an IL stack entry for a first IL instruction corresponding to a first IL offset;
an IL offset stack that stores a second IL offset corresponding to a second IL instruction; and
a flag entry that indicates if the first IL instruction has been processed;
(b) a sequencing module that determines a next IL instruction that is to be processed in accordance with an op code type that is associated with the first IL instruction;
(c) a memory updating module that updates the data structure with the state information about the first IL instruction and updates the IL offset stack; and
(d) rule logic module that processes the first IL instruction in accordance with the op code type.

21. The verification module of claim 20, further comprising:
(e) a status module that obtains results from the rule logic module; and
(f) a display unit that is instructed by the status module to control an indicator in accordance with the results.

22. The verification module of claim 20, further comprising:
(e) a status module that obtains results from the rule logic module and informs a server to reload another version of the IL program.

23. The verification module of claim 20, wherein the information that is stored in the IL stack entry is differentially characterized between the IL instruction and another IL instruction.

24. The verification module of claim 20, wherein the rule logic module is in accordance with European Computer Manufacturer's Association (ECMA) standards for an intermediate language.

25. The verification module of claim 20, wherein the verification module is coupled to a compiler module.

26. The verification module of claim 20 that is implemented with a component selected from the group consisting of: a general purpose computer, a microprocessor, a discrete logic circuitry, and an application specific integrated circuit (ASIC).

27. The verification module of claim 20, wherein the IL program is obtained from a high-level program that is written in a high-level language that is selected from the group consisting of a visual basic language, a C++ language, and a C# language.
